Europäisches Patentamt

European Patent Office

Office européen des brevets

(11) Publication number: **0 277 465 B1**

## EUROPEAN PATENT SPECIFICATION

(45) Date of publication of patent specification: **26.02.92**　(51) Int. Cl.⁵: **B60T 15/24**

(21) Application number: **87830457.5**

(22) Date of filing: **22.12.87**

(54) **Servo-distributor for a pneumatic braking system of a tractor, for controlling the braking of a trailer towed by the tractor.**

(30) Priority: **30.12.86 IT 6799586**

(43) Date of publication of application:
**10.08.88 Bulletin  88/32**

(45) Publication of the grant of the patent:
**26.02.92 Bulletin  92/09**

(84) Designated Contracting States:
**AT BE CH DE ES FR GB IT LI NL SE**

(56) References cited:
**DE-A- 3 247 949**
**DE-A- 3 427 560**

(73) Proprietor: **BENDIX HEAVY VEHICLE SYSTEMS ITALIA S.P.A.**
**Via Adriano 81**
**I-20128 Milano(IT)**

(72) Inventor: **Angelillo, Domenico**
**Via Pisa 54**
**I-20099 Sesto San Giovanni Milano(IT)**

(74) Representative: **Ouinterno, Giuseppe et al**
**c/o Jacobacci-Casetta & Perani S.p.A. Via Alfieri, 17**
**I-10121 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a servo-distributor for a pneumatic braking system for a tractor, intended to control the braking of a trailer towed by the tractor, of the kind defined in the introduction of the appended Claim 1.

A servo-distributor of this kind is disclosed in DE-A-3 247 949. This prior device has the inconvenience that the emergency braking of the trailer intervenes with a certain delay, some time after the occurrence of a rupture in the trailer braking control line. Furthermore, during a leakage of pressure from the trailer supply line to the atmosphere, pressure also leaks from the supply connector of the servo-distributor to the atmosphere, partially unloading the pressure reservoirs of the tractor.

The object of the present invention is to produce an improved servo-distributor of the type specified above.

According to the invention, this object is achieved by means of a servo-distributor of the type specified above, the main features of which are defined in the characterising portion of annexed Claim 1.

Further characteristics and advantages of the servo-distributor according to the present invention will become clear from the detailed description which follows with reference to the appended drawings, provided purely by way of non-limiting example, in which:

Figure 1 shows a triple-control servo-distributor according to the present invention,

Figure 2 is an axial section of the servo-distributor of Figure 1, showing a first operating condition of the device,

Figure 3 is a view similar to Figure 2, showing the servo-distributor in another operating condition,

Figures 4 and 5 are axial sections of a variant of the device according to the invention in first and second operating conditions respectively,

Figures 6 and 7 are sectional views similar to Figures 1 and 2, which show a further variant of the device according to the invention, in first and second operating conditions respectively,

Figure 8 is an axially sectioned view of a further variant of the device according to the invention, and

Figure 9 is a sectional view of another variant of the device according to the invention.

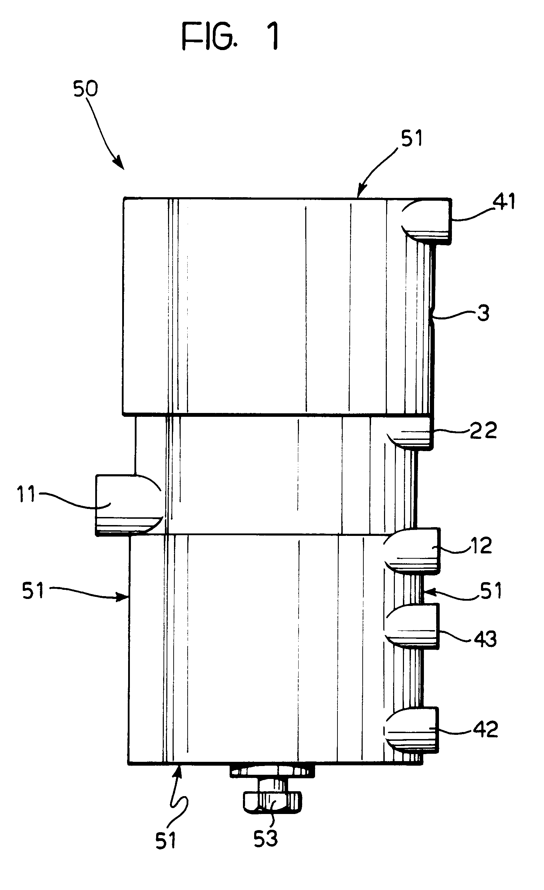

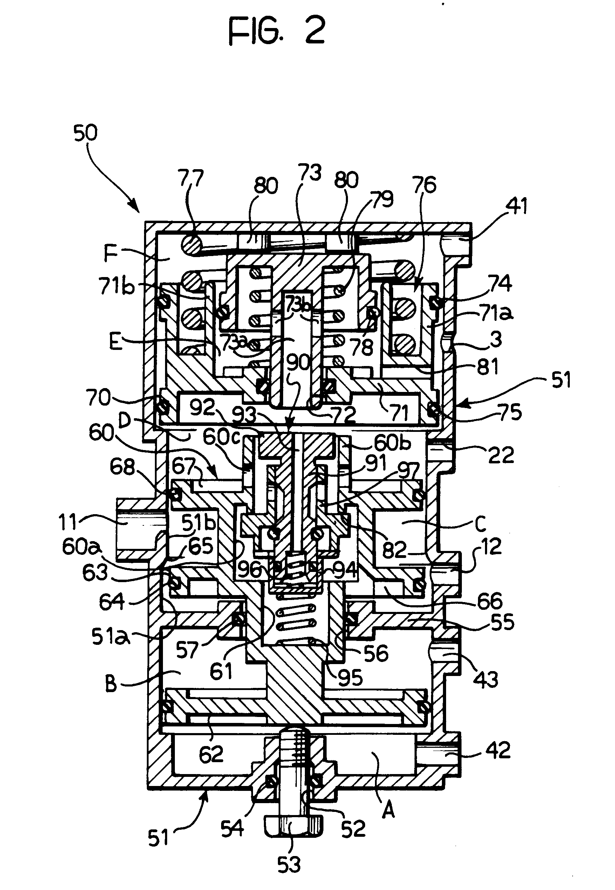

A servo-distributor according to the present invention is generally indicated 50 in Figure 1. This includes a metal body 51 which has a substantially elongate cylindrical shape in the example illustrated. This body is hollow and, in its middle region, has a supply connector 11 for connection to a pressure reservoir of the braking system of a tractor. An outlet connector for connection to the line (automatic line) for supplying pressure to the reservoir of the braking system of a trailer is indicated 12. As can be seen from Figure 2, in the embodiment illustrated, the connectors 11 and 12 are in respective axially staggered positions relative to the longitudinal axis of the body 51.

Further inlet connectors at the ends of the body 51 are indicated 41 and 42.

Between the connectors 12 and 42, the body 51 has a further inlet connector 43, whilst a further outlet connector 22 is formed between the connectors 12 and 41.

An exhaust opening to the atmosphere, indicated 3, is formed in the wall of the body 51 between the connectors 22 and 41.

For ease of reading on the part of persons skilled in the art, the connectors described above have been distinguished with reference numerals corresponding to the marking system according to international standards of identification for the orifices of equipment for braking systems.

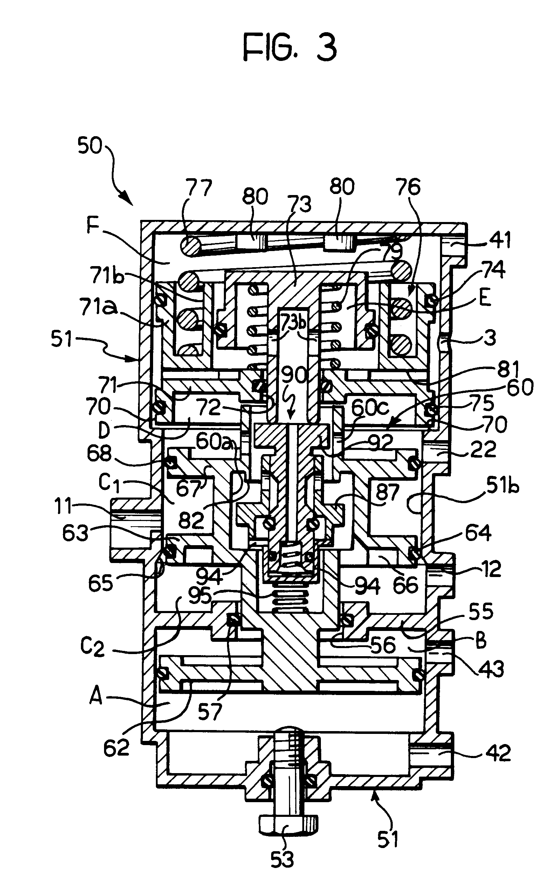

As seen in detail in Figures 2 and 3, there is formed in the base wall of the body 51 a partially threaded opening 52 in which is engaged a regulating screw 53 whose shank is correspondingly partially threaded. A sealing ring 54 is situated in the opening 52, around the smooth portion of the shank of the screw 53.

In the axial portion of the body 51 between the connectors 12 and 43, the body has a transverse wall 55 with a central hole 56 in which there is a sealing ring 57.

A movable element, generally indicated 60, has a hollow middle portion 61 axially sealingly slidably mounted in the hole 56 in the wall 55. The portion of this movable element which extends below the wall 55 has a substantially disc-shaped circumferential protrusion 62 sealingly slidably mounted like a piston in the axial portion of the body 51 between the connectors 42 and 43.

The variable-volume chamber defined between the lower portion of the body 51 and the disc portion 62 of the movable element 60, into which the connector 42 opens, is indicated A. The connector 42 is intended to be connected to the outlet of one of the two sections of the duplex or tandem-type distributor (not illustrated) which is activated by the brake pedal to control braking in the two independent circuits of the tractor.

Between the disc portion 62 of the movable element 60 and the wall 55 of the body 51, there is defined a further variable-volume chamber, indicated B, into which the connector 43 opens. This connector is intended to be connected to a manually operated valve or distributor for controlling parking and emergency braking. The chamber B is normally kept under pressure: the pressure in this chamber decreases upon operation of the manual valve or distributor for controlling parking and emergency braking (not illustrated), connected to the connector 43.

Above the transverse wall 55, the body 51 has, firstly, a portion 51a in which a skirt portion 63 of the movable element 60, provided externally with a sealing ring 64, extends with radial clearance. The portion 51a is joined at 65 to a succeeding axial portion 51b of the body 51, coaxial with the former but having a reduced diameter.

The skirt portion 63 of the movable element 60 can slide sealingly like a piston against the wall of the reduced-diameter portion 51b of the body.

The outlet connector 12 is formed in the larger-internal-diameter portion 51a of the body, whilst the connector 11 opens into the reduced-internal-diameter portion 51b.

At least one aperture, indicated 66 in Figures 2 and 3, which establishes communication between the cavity of the movable element and the region above the wall 55, is formed in the skirt portion 63 of the movable element.

A further skirt portion of the movable element 60, indicated 67, is axially spaced from the portion 63 and carries a peripheral sealing ring, indicated 68. The portion 67 of the movable element is sealingly slidable in the portion of the body 51 between the connectors 11 and 22 and, with the wall 55, defines a variable-volume supply chamber C. During operation, the compressed air coming from the reservoir of the tractor braking system through the connector 11 and the chamber C reaches the outlet connector 12 and, through the automatic line, arrives at the pressure reservoir of the trailer braking system.

The diameter of the axial upper end portion of the body 51 above the connector 22 is increased again to form a shoulder, indicated 70. Sealingly slidably mounted in this portion of the body 51 is a piston 71 having a central hole 72 through which a further piston 73 is axially sealingly slidable.

The piston 71 has an external tubular part 71a carrying external sealing rings 74 and 75 in contact with the wall of the body 1, and a radially more internal tubular part 71a coaxial with the former and forming with it an annular housing 76 in which a helical spring 77 extends.

The piston 73 is essentially mushroom-shaped. Its lateral wall carries an external sealing ring 78 and is axiall slidable within the internal tubular part 71b of the piston 71. The piston 73 has a tubular shaft or stem 73a sealingly slidably mounted in the hole 72 in the piston 71. A helical spring 79 is interposed between the head of the piston 73 and the piston 71. This spring biases the piston 73 against the stops 80 on the upper wall of the body 51.

The portion of the head of the piston 71 between its tubular parts 71a and 71b has a radial passage 81 which is permanently in communication with the exhaust opening 3 to atmosphere.

The stem 73a of the piston 73 has apertures 73b in a portion which is always above the hole 72 in the piston 71, whatever the relative position assumed by the piston 73 with respect to the piston 71.

A variable-volume chamber between the portion 67 of the movable element 60 and the piston 71 is indicated D. The outlet connector 22 faces this chamber.

An exhaust chamber between the pistons 71 and 73 is indicated E. This chamber is in permanent communication with the exhaust opening 3 to the atmosphere through the passage 81. This chamber can also communicate with the chamber D through the apertures 73b of the stem 73.

A control chamber between the upper end wall of the body 51 and the pistons 71 and 73 is indicated F. The inlet connector 41 opens into this chamber. In use, this connector is connected to the outlet of the other section of the duplex or tandem distributor of the tractor braking system.

As stated above, the movable element 60 is hollow and its cavity, indicated 60a, opens upwardly towards the chamber D through a tubular part 60b. This tubular part extends towards the piston 71 and has through-holes 60c.

A valve seat formed by an axial extension of the tubular part 60b towards the cavity 60a of the movable element 60 is indicated 82.

A movable element, indicated 90, comprises a core 91 which has a head 92 at the top and in which an axial through-hole 93 is formed. This core has a lower end slidably mounted in a cup element 94 urged upwardly by a spring 95 which reacts against the base wall of the cavity of the element 60. A spring 96 is situated between the base wall of the cup element 94 and the core 91. A tubular element, indicated 97, surrounds the middle portion of the core 91 and bears at its lower end on the upper edge of the cup element 94. The tubular element 97 has a radially enlarged middle portion situated below and facing the valve seat 82 with which it cooperates as an obturator. The valve consisting of the seat 82 and the obturator 97 controls communication between the chambers C and D, which is possible through the passage 66 formed in the skirt portion 63 of the movable element 60.

The head 92 of the core 91 faces the lower end edge of the stem 73a of the piston 73. This end edge of the piston 73 and the head of the core 91 can cooperate like a valve obturator and seat to control communication between the chamber D and the chamber E.

The servo-distributor described above operates in the following manner.

In Figure 2, the servo-distributor is illustrated in the rest condition assumed during normal running of the tractor. In this situation, the connector 43 is continuously supplied with air coming from the manually-controlled valve or distributor for the parking and emergency brakes; this pressure acts on the portion 62 of the movable element 60 to hold this element down against the adjustment screw 53. The compressed air arriving through the inlet connector 11 enters the chamber C and reaches the trailer reservoir through the outlet connector 12 and the automatic line. The obturator 97 is in contact with the seat 82, whilst the obturator 92 is spaced from the end of the piston 73. Consequently, the chamber D is not in communication with the chamber C, but is in communication with the exhaust chamber E and thus with the atmosphere through the passage 81 and the exhaust opening 3. No pressure is therefore supplied to the regulable control line for braking the trailer.

If the brake pedal of the tractor is now operated, the duplex or tandem distributor activated by the brake pedal causes a simultaneous supply of pressure to the chambers F and A through the connectors 41 and 42 of the servo-distributor. The pressure in the chamber F causes the piston 73 to descend, whilst the pressure in the chamber A causes the movable element 60 to rise. When the core 91 abuts the lower end of the piston 73, the chamber D is disconnected from the exhaust chamber E. Further upward displacement of the movable element 60 causes the seat 82 to move away from the obturator 97 and thus puts the chamber D into communication with the supply chamber C. The compressed air present in the chamber C causes braking of the trailer through the chamber D and the regulable braking control line connected to the connector 22.

During service braking, the movable element 60 moves upwardly, as stated, but not far enough, however, to bring the skirt portion 63 into engagement with the reduced-internal-diameter portion 51b of the body 51.

If, during a service braking phase, the regulable braking control line of trailer connected to the connector 22 ruptures, the chamber D becomes depressurised. The movable element 60 therefore moves further up to bring its portion 63 into engagement with the reduced-diameter portion 51b of the body 51, as shown in Figure 3. In this condition, the supply chamber C is subdivided into two spaces, indicated $C_1$ and $C_2$ in Figure 3, which are not in communication with each other. The space 51 is between the portions 63 and 67 of the movable element and communicates with the supply connector 11. The space $C_2$ is between the portion 63 of the movable element 60 and the internal transverse wall 55 of the body of the servo-distributor and communicates with the connector 12. In the condition illustrated in Figure 3, the space $C_2$ communicates with the chamber D through the passage 66 and the open valve 82-87 and, hence, through the connector 22, this space communicates with the atmosphere through the point of rupture of the rgulable line. The automatic line therefore discharges into the atmosphere through the connector 12, the space $C_2$, the chamber D, the connector 22 and the point of rupture of the regulable line. This causes, in known manner, the intervention of the automatic braking of the trailer.

The portion 63 of the movable element 60 with the sealing ring 64, however, cuts off the supply of pressure.

With reference again to Figure 2, if the parking and emergency brakes of the tractor are applied during normal running, the pressure in the chamber B, which tends to keep the movable element 60 down, is lost in known manner. This element therefore ascends until the obturator 97 has left the seat 82 and the chamber C is put into communication with the chamber D. In this case, the servo-distributor also supplies braking control pressure through the regulable line connected to the connector 22, causing braking of the trailer.

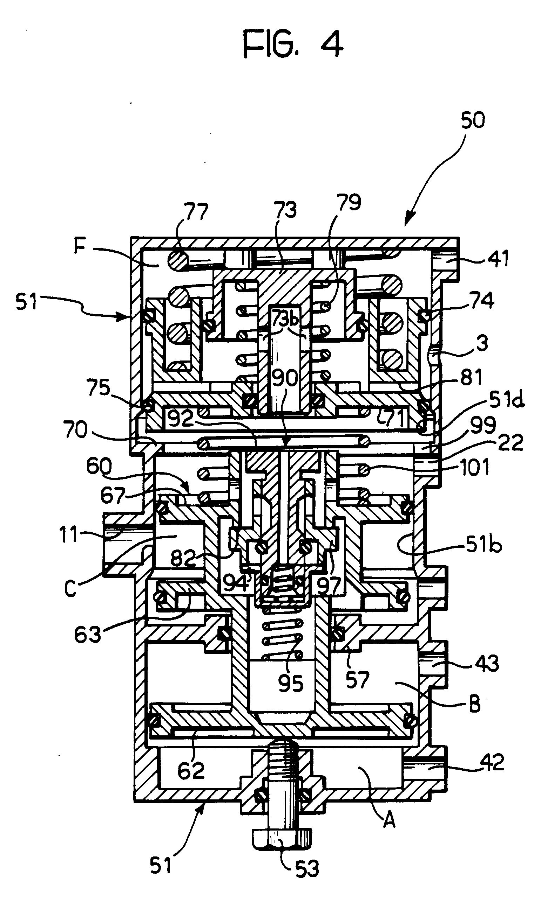

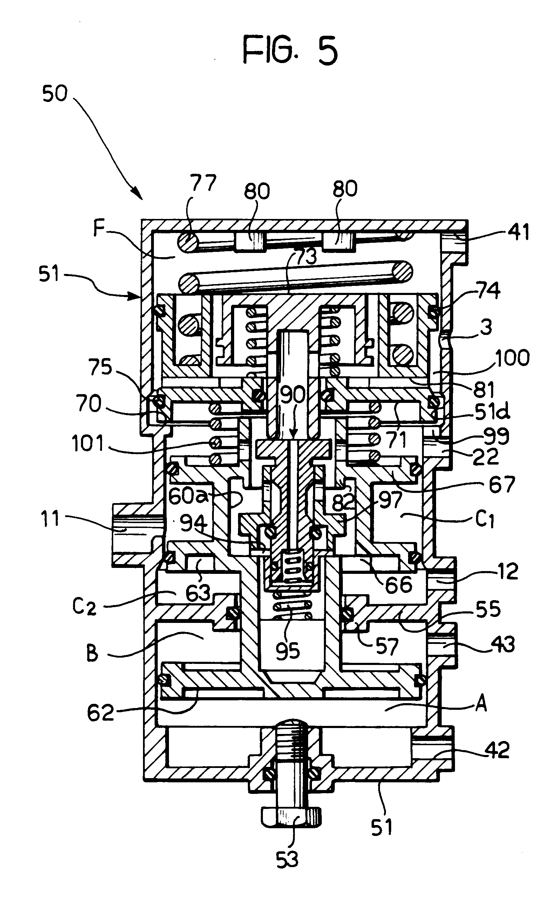

Figures 4 and 5 illustrate a first variant of the servo-distributor described with reference to Figures 1 and 3. In Figures 4 and 5, the parts already described above have again been given the same reference numerals.

With respect to the embodiment of Figures 1 to 3, the servo-distributor of Figures 4 and 5 has the following variations.

In the portion adjacent the shoulder 70, the wall of the body 51 has an internal annular groove 51d. This groove communicates with the connector 22 through a slot 99 formed in the shoulder 70.

The width of the annular groove 51d in the body 51 is such that, when the piston 71 strikes the shoulder 70 (Figure 5), a passage 100 communicating with the exhaust opening 3 is defined between the piston and the wall of the body 51.

Between the piston 71 and the portion 67 of the movable element 60 in the chamber D, there is a helical spring 101 which has the function of returning the piston 71 to the rest position of Figure 4.

The servo-distributor of Figures 4 and 5 functions in exactly the same way as the servo-distributor of Figures 1 to 3, both during service braking and during parking and emergency braking. In the event of rupture of the regulable line during service braking, the servo-distributor according to Figures 4 and 5 allows the automatic line to discharge not only through the point of rupture of the regulable line, as occurs in the servo-distributor of Figures 1 to 3, but also directly to the atmosphere through the slot 99 and the passage 100, as shown in Figure 5.

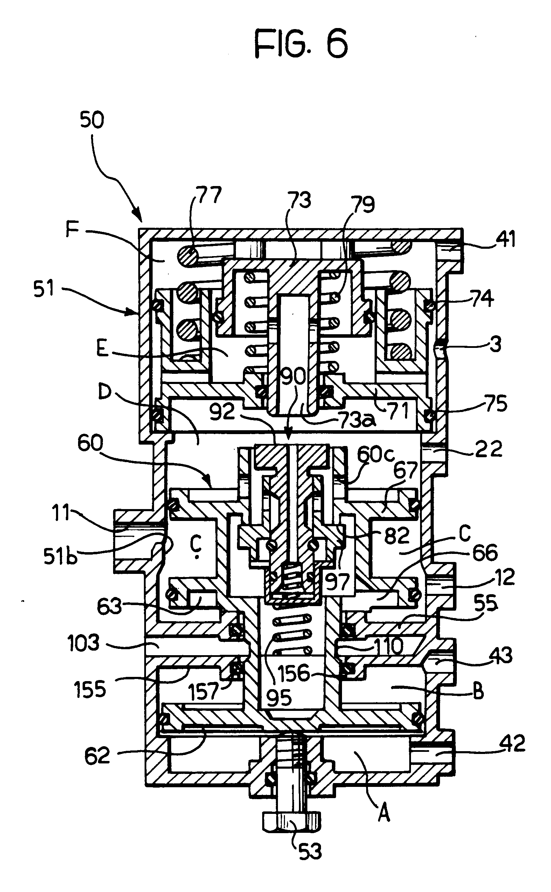

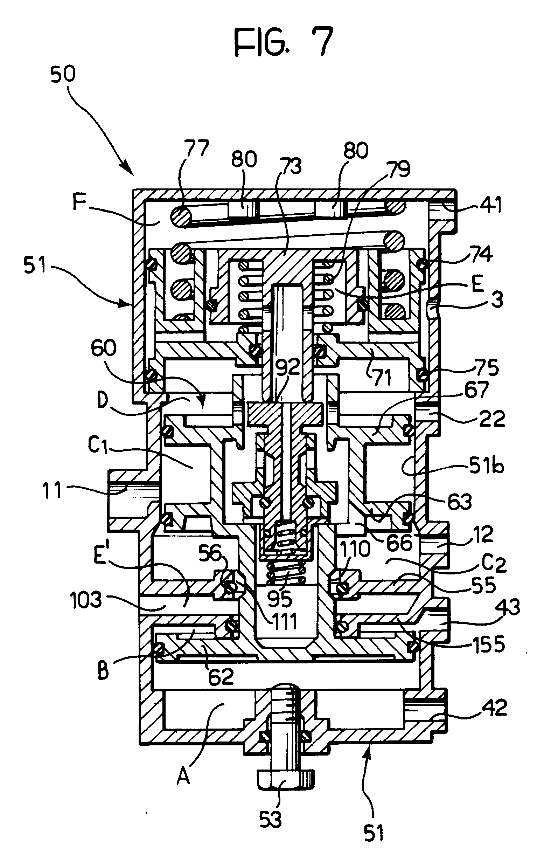

In Figures 6 and 7 a further variant of the servo-distributor according to the invention is shown, which also allows the automatic line to discharge not only through the point of rupture of the regulable line, but also by a direct route to the atmosphere.

The variant of Figures 6 and 7 has the following differences with respect to the servo-distributor of Figures 1 to 3.

Between the inlet connector 43 and the transverse wall 55, the body 51 has a further transverse wall 155 having a central opening 156 provided with a sealing ring 157. This opening is coaxial with the opening in the wall 55 and the axial portion of the movable element 60 between the skirt portion 63 and the lower disc portion 62 is sealingly slidable through it.

Between the transverse walls 55 and 155 there is defined an exhaust chamber E′ which communicates with the atmosphere through an exhaust opening 103.

In Figure 6, the servo-distributor is illustrated in the rest condition which it assumes in running conditions. In this condition, the movable element 60 lies in its lower position against the adjustment screw 53. An annular groove 110 is formed in the axial portion of this movable element which, in the rest condition, is between the walls 55 and 155.

In the event of rupture of the regulable line during a service braking phase, as shown in Figure 7, the movable element 60 moves upwards and its skirt portion 63 disconnects the inlet connector from the space $C_2$, whilst the groove 110 is disposed so as to face the edge of the opening 56 in the transverse wall 55 and define, with respect to the latter, an annular space 111 which puts the space $C_2$ into communication with the supplementary exhaust chamber E′. In this way, the automatic line can be discharged rapidly through the annular passage 111 and the supplementary exhaust chamber E′, causing intervention of the automatic braking of the trailer.

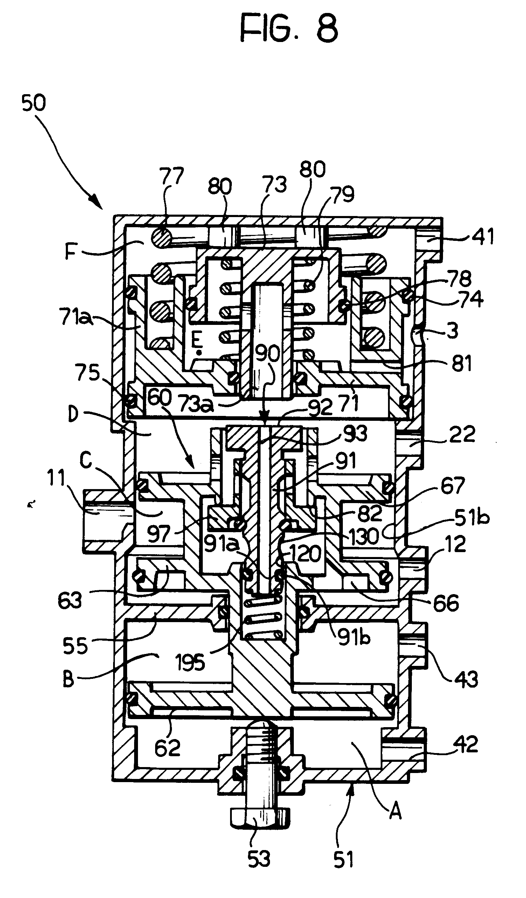

Finally, Figure 8 illustrates a further variant which has the following differences with respect to Figures 1 to 3.

The lower end portion 91a of the core 91 of the movable element 90 has an external sealing ring 91b and is sealingly slidably mounted in a middle axial portion 120 of the cavity of the movable element 60, which is of reduced section. In the portion of the core between the sealing ring 91b and the obturator 97, this core has an external circumferential groove 130.

A helical spring 195 situated between the core 91 and the base wall of the cavity of the movable element 60 pushes this core upwards into a position in which the circumferential groove 130 of the core is above the restriction 120 of the internal cavity of the movable element 60. In this condition, the obturator 97 lies against the valve seat 82.

If a rupture of the regulable line occurs during service braking, the movable element 60 moves upwards in this case also, and its skirt portion 63 engages the reduced-section portion 51b of the body 51 to disconnect the connector 11 from the connector 12. Moreover, as a result of the upward displacement of the movable element 60, the lower edge of the reduced-section portion 120 of the cavity of this element rises above the lower edge of the circumferential groove 130 of the core 91. Thus, there is no longer a seal between the core and the reduced-section portion 120 of the passage of the element 60. A discharge route is thus created between the space $C_2$ and the atmosphere through the passage 66, the passage defined between the groove 130 of the core 91 and the base portion of the cavity of the element 60, the axial passage 93 of the core 91, the tubular stem 73a of the piston 73, the exhaust chamber E, the passage 81, and the exhaust opening 3.

In the variant of Figure 8, therefore, the servo-distributor according to the invention also allows rapid discharge of the automatic line in the event of rupture of the regulable line, not only through the point of rupture of the regulable line, but also through the discharge route defined above.

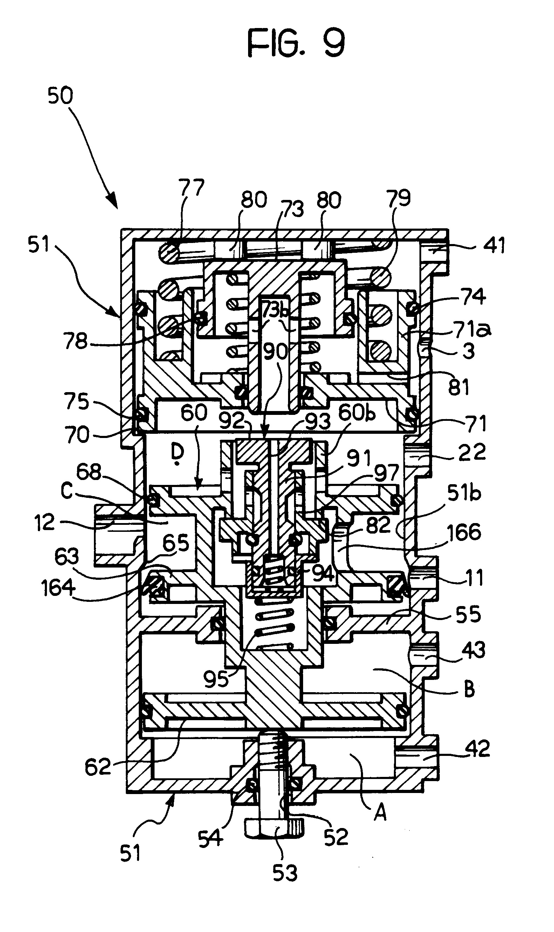

Further variants of the embodiments illustrated in Figures 1 to 5 can be obtained by reversing the roles of the connectors 11 and 12, to close the passage 66 of the movable element 60 and open a new passage 166 between the portions 63 and 67 of this element, as illustrated in Figure 9 (a variant achieved from the mode of realisation of Figures 2-3).

Furthermore, in all the above variants, the portion 63 of the movable element 60 can be provided with a lipped sealing ring, such as that indicated 164 in Figure 9, instead of the sealing ring 64.

Naturally, the principle of the invention remaining the same, the forms of embodiment and details of realisation can be varied widely with respect to those described and illustrated purely by way of non-limiting example, without thereby departing from the scope of the present invention.

## Claims

1. A servo-distributor for a pneumatic braking system for a tractor, intended to control the braking of a trailer, the braking system including a distributor for controlling the braking of the tractor, the servo-distributor comprising a hollow body (51) in which are defined

a supply chamber (C) intended to be connected to a pressure source through a supply connector (11) of the body (51), and to a line for supplying pressure to the braking system of the trailer through a supply outlet connector (12);

an exhaust chamber (E) communicating with the atmosphere through an exhaust opening (3);

at least one control chamber (F,A) intended to be connected to a corresponding outlet of the distributor through an inlet connector (41, 42), and

an outlet chamber (D) intended to be connected to a line for supplying the braking control pressure to the braking system of the trailer;

in the body (51) there being provided relay valve means (92, 73a; 82, 97) controlled by the pressure in the control chamber (F;A) in such a way that, during service braking of the tractor, the relay valve means (73a, 92; 82, 97) disconnect the outlet chamber (D) from the exhaust chamber (E) and connect the supply chamber (C) to the outlet chamber (D); and

further valve means (63, 64; 51b), operatively associated with the relay valve means (73a, 92; 82, 97) are provided in the supply chamber (C) and adapted to assume during service braking a first condition in which they allow communication between the supply connector (11) and the outlet connector (12) when the difference between the pressure in the control chamber (A;F) and the pressure in the outlet chamber (D) is lower than a predetermined value, and a second condition in which they allow communication between the said supply outlet connector (12) and the outlet chamber (D) when the difference between the pressure in the control chamber (A;F) and the pressure in the outlet chamber (D) exceeds the predetermined value; characterised in that said further valve means (63, 64; 51b, 92; 82, 97) are adjusted in said second condition to prevent fluid communication between the supply connector (11) and the outlet chamber (D) as well as between the said supply connector (11) and the supply outlet connector (12); in said second condition the further valve means (63, 64; 51b, 92, 82, 97) allowing unrestricted communication between the supply outlet connector (12) and the outlet chamber (D).

2. A servo-distributor according to Claim 1, characterised in that further valve means (71, 52d; 91, 91b; 120) are provided in the body (51) and are intended to put the outlet chamber (D) into communication with the exhaust opening (3) when the valve means (63, 64; 51b) assume the second condition.

3. A servo-distributor according to claim 1, characterised in that the body has a supplementary exhaust opening (103) and further valve means (55, 56, 60, 110) intended to put the outlet chamber (D) into communication with the supplementary exhaust opening (103) when the valve means (63, 64, 51b) assume the second condition.

**Revendications**

1. Servo-distributeur pour un système de freinage pneumatique d'un tracteur, destiné à commander le freinage d'une remorque, le système de freinage comportant un distributeur pour commander le freinage du tracteur, le servo-distributeur comprenant un corps creux (51) dans lequel sont définis

une chambre d'alimentation (C) prévue pour être connectée à une source de pression à travers un connecteur d'alimentation (11) du corps (51) et à un circuit d'alimentation en pression du système de freinage de la remorque à travers un connecteur de sortie (12) de l'alimentation ;

une chambre d'échappement (E) en communication avec l'atmosphère à travers une ouverture d'échappement (3) ;

au moins une chambre de commande (F ; A) prévue pour être connectée à une sortie correspondante du distributeur à travers un connecteur d'admission (41, 42), et

une chambre de sortie (D) prévue pour être connectée à un circuit d'alimentation en pression de commande du freinage du système de freinage de la remorque ;

le corps (51) étant muni de moyens de valves de relais (92, 73a ; 82, 97) commandés par la pression existant dans la chambre de commande (F ; A) de telle sorte que, au cours de l'opération de freinage du tracteur, les moyens de valves de relais (73a, 92 ; 82, 97) déconnectent la chambre de sortie (D) de la chambre d'échappement (E) et connectent la chambre d'alimentation (C) à la chambre de sortie (D) ; et

comportant en outre des moyens de valves additionnels (63, 64 ; 51b) associés en fonctionnement avec les moyens de valves de relais (73a, 92 ; 82, 97) dans la chambre d'alimentation (C) et adaptés pour remplir au cours d'une opération de freinage, une première condition dans laquelle ils permettent la mise en communication du connecteur d'alimentation (11) avec le connecteur de sortie (12) lorsque la différence de pression entre la pression existant dans la chambre de commande (A ; F) et la pression existant dans la chambre de sortie (D) est inférieure à une valeur prédéterminée, et une seconde condition dans laquelle ils permettent la mise en communication dudit connecteur de sortie (12) de l'alimentation avec la chambre de sortie (D) lorsque la différence de pression entre la pression existant dans la chambre de commande (A ; F) et la pression existant dans la chambre de sortie (D) est supérieure à la valeur prédéterminée ; caractérisé en ce que lesdits moyens de valves additionnels (63, 64 ; 51b, 92 ; 82, 97) sont adaptés dans ladite deuxième condition pour interdire la circulation du fluide entre le connecteur d'alimentation (11) et la chambre de sortie (D) de même qu'entre ledit connecteur d'alimentation (11) et le connecteur de sortie (12) de l'alimentation ; dans ladite deuxième condition les moyens de valves additionnels (63, 64 ; 51b, 92 ; 82, 97) permettant la mise en communication libre du connecteur de sortie (12) de l'alimentation avec la chambre de sortie (D).

2. Servo-distributeur selon la revendication 1, caractérisé en ce que le corps (51) comporte en outre des moyens de valves additionnels (71, 52d ; 91, 91b ; 120) prévus pour mettre en communication la chambre de sortie (D) avec l'ouverture d'échappement (3) lorsque les moyens de valves (63, 64 ; 51b) remplissent la deuxième condition.

3. Servo-distributeur selon la revendication 1, caractérisé en ce que le corps comporte une ouverture d'échappement supplémentaire (103) et des moyens de valves additionnels (55, 56, 60, 110) prévus pour mettre en communication la chambre de sortie (D) avec l'ouverture d'échappement supplémentaire (103) lorsque les moyens de valves (63, 64, 51b) remplissent la deuxième condition.

**Patentansprüche**

1. Servoverteiler für ein pneumatisches Bremssystem für eine Zugmaschine, das zur Bremssteuerung eines Anhängers der Zugmaschine vorgesehen ist, wobei das Bremssystem einen Verteiler zur Steuerung des Bremsens der Zugmaschine aufweist, wobei der Servoverteiler einen Hohlkörper (51) aufweist, in welchem sich befinden:
   - eine Speisekammer (C), die zum Anschluß an eine Druckquelle über einen Speiseanschluß (11) im Körper (51) vorgesehen ist und an eine Leitung zur Versorgung des Bremssystems des Anhängers über einen Versorgungsausgangsanschluß (12);
   - eine Abblasekammer (E), die über eine Abblaseöffnung (3) mit der Atmosphäre in Verbindung steht;
   - zumindest eine Steuerkammer (F,A), die für den Anschluß an einen entsprechenden Ausgang des Verteilers über einen Eingangsanschluß (41, 42) vorgesehen ist; und
   - eine Ausgangskammer (D), die für den Anschluß an eine Versorgungsleitung mit Bremskontrolldruck zu dem Bremssystem des Anhängers vorgesehen ist;

wobei im Körper (51) Ventilrelaisvorrichtungen (92, 73a; 82, 97) vorgesehen sind, die durch den Druck in der Steuerkammer (F;A) solcherart gesteuert werden, daß während einer Betriebsbremsung der Zugmaschine die Ventilrelaisvorrichtungen (73a, 92; 82, 97) die Ausgangskammer (D) von der Abblasekammer (E) trennen und die Speisekammer (C) mit der Ausgangskammer (D) verbinden;

und daß weitere Ventilvorrichtungen (63, 64; 51b), die mit den Ventilrelaisvorrichtungen (73a, 92; 82, 97) arbeitswirksam verbunden sind, in der Speisekammer (C) vorgesehen sind und dafür angepaßt sind, während einer Betriebsbremsung einen ersten Zustand anzunehmen, in welchem sie eine Verbindung zwischen dem Speiseanschluß (11) und dem Ausgangsanschluß (12) herstellen, wenn der Unterschied zwischen dem Druck in der Steuerkammer (A;F) und dem Druck in der Ausgangskammer (D) niedriger als ein vorbestimmter Wert ist und einen zweiten Zustand, in welchem sie eine Verbindung zwischen dem Versorgungsausgangsanschluß (12) und der Ausgangskammer (D) herstellen, wenn der Unterschied zwischen dem Druck in der Steuerkammer (A;F) und dem Druck in der Ausgangskammer (D) den vorbestimmten Wert überschreitet,

**dadurch gekennzeichnet,**

daß die weiteren Ventilvorrichtungen (63, 64; 51b, 92; 82, 97) dafür angepaßt sind, daß sie in dem zweiten Zustand eine Fluidumsverbindung sowohl zwischen dem Speiseanschluß (11) und der Ausgangskammer (D) als auch zwischen dem Speiseanschluß (11) und dem Versorgungsausgangsanschluß (12) verhindern; wobei in dem zweiten Zustand die weiteren Ventilvorrichtungen (63, 64; 51b, 92; 82, 97) unbegrenzte Verbindung zwischen dem Versorgungsausgangsanschluß (12) und der Ausgangskammer (D) gestatten.

2. Servoverteiler gemäß Anspruch 1,
**dadurch gekennzeichnet,**
daß weitere Ventilvorrichtungen (71, 52d; 91, 91b; 120) im Körper (51) vorgesehen sind und mit ihnen beabsichtigt ist, die Ausgangskammer (D) in Kommunikation mit der Ablasöffnung (3) zu bringen, wenn die Ventilvorrichtungen (63, 64; 51b) den zweiten Zustand annehmen.

3. Servoverteiler gemäß Anspruch 1,
**dadurch gekennzeichnet,**
daß der Körper eine ergänzende Abblasöffnung (103) und weitere Ventilvorrichtungen (55, 56, 60, 110) aufweist, mit denen beabsichtigt ist, die Ausgangskammer (D) in Verbindung mit der Ergänzungsabblasöffnung (103) zu bringen, wenn die Ventilvorrichtungen (63, 64, 51b) den zweiten Zustand annehmen.

# FIG. 1

EP 0 277 465 B1

# FIG. 2

# FIG. 3

EP 0 277 465 B1

## FIG. 4

# FIG. 5

# FIG. 6

# FIG. 7

# FIG. 8

# FIG. 9